# DEMANDE DE BREVET EUROPEEN

(11) **EP 1 375 436 A1**
(43) Date de publication de la demande: **02.01.2004**
(21) Numéro de dépôt: 03291527.4
(22) Date de dépôt: 23.06.2003
(51) Int. Cl.: C02F 3/12, C02F 3/00

(54) **Procédé de conduite d'un réacteur séquentiel discontinu de traitement d'eaux résiduaires**

(30) Priorité: 24.06.2002 FR 0207781
(71) Demandeur: Societe Hermex, 45270 Bellegarde (FR)
(72) Inventeur: Casellas, Magali, 87000 Limoges (FR); Dagot, Christophe, 87260 St. Hilaire Bonneval (FR); Zaninetti, Jacques, 87130 Chateauneuf la forêt (FR)
(74) Mandataire: Le Bras, Hervé

(57) **Abrégé**

L'invention concerne un procédé de conduite d'un réacteur séquentiel discontinu de traitement d'eaux résiduaires par des bactéries libres en suspension, selon lequel, dans chaque cycle, on remplit le réacteur contenant un résidu de boues issues du cycle précédent par des eaux résiduaires, on procède à plusieurs étapes de réaction anoxique et aérobie, on décante et on vidange les eaux claires. Le réacteur est équipé d'un capteur (27) de mesure de l'oxygène dessous, un capteur (28) de mesure du potentiel redox et un capteur (29) de pH et d'un organe de calcul recevant des signaux fournis par ces capteurs. L'organe de calcul établit les courbes de vitesse spécifiques de consommation d'oxygène, de potentiel redox et de pH, calcule les points d'inflexion des courbes de consommation d'oxygène et du potentiel redox , et les minima maxima du pH. La fin des étapes de réaction est définie respectivement par la détection du maximum du pH et le point d'inflexion de la courbe du potentiel redox, pour les réactions anoxiques, et la détection du minimum du pH et le point d'inflexion de la courbe de consommation d'oxygène, pour les réaction aérobies.

## Description

L'invention concerne le traitement, par des bactéries libres en suspension aérées, des eaux résiduaires ou des effluents urbains.

Elle concerne plus précisément un procédé de conduite d'un réacteur séquentiel discontinu destiné au traitement des eaux résiduaires ou effluents, selon un procédé de traitement par des bactéries libres en suspension aérées comportant, dans un cycle de traitement, les étapes suivantes :
- une première étape comportant le remplissage du réacteur, contenant des boues activées issues du cycle de traitement précédent, par des eaux résiduaires, de manière à maintenir l'anoxie, et une première phase de réaction anoxique afin de consommer les nitrates résiduels du cycle précédent et de créer des conditions anaérobies propres au relargage du phosphore ;
- une première phase de réaction aérobie afin de permettre l'élimination du carbone biodégradable et la nitrification ;
- une deuxième phase de réaction anoxique permettant la dénitrification des effluents ;
- une deuxième phase de réaction aérobie ;
- la décantation des effluents pour séparer la phase liquide de la phase solide ;
- l'évacuation des eaux claires par vidange partielle du réacteur ; et
- une étape de repos au cours de laquelle on extrait éventuellement le surplus de boues du réacteur ;
ledit réacteur étant équipé de moyens d'agitation des effluents, de moyens d'aération des effluents lors des phases aérobies, de moyens de remplissage et de moyens de vidange, lesdits moyens étant commandés par des moyens de commande gérant la chronologie et la durée des étapes successives.

Les contraintes en matière de protection de l'environnement obligent les collectivités locales à s'impliquer de plus en plus dans les systèmes d'assainissement, à les fiabiliser et à les pérenniser. Si les collectivités de taille importante trouvent assez facilement des moyens, en hommes et en argent, pour s'occuper de la conduite et de l'entretien de leurs systèmes d'assainissement, il n'en est pas toujours de même pour les collectivités de taille moyenne ou petite.

La présente invention a pour but de satisfaire principalement les besoins des collectivités de taille moyenne ou petite.

Les procédés de traitement biologique des eaux usées doivent répondre à un cahier des charges fixé par différentes législations. Actuellement, les normes de rejet appliquées sont fonction de la taille de la commune, de la zone de rejet et portent sur quatre paramètres : la matière organique, l'azote, le phosphore et les matières en suspension.

La très grande majorité des systèmes de traitement des eaux proposée aux collectivités sont des systèmes biologiques, ce qui veut dire que ces systèmes favorisent la consommation de la pollution par la mise en contact de l'eau usée avec une flore bactérienne indigène, en présence d'oxygène ou non.

On rencontre deux types de systèmes de traitement :
- soit les bactéries sont accrochées sur un support, et on retrouve alors les systèmes calqués sur l'assainissement individuel, tels que les fosses toutes eaux plus épandage dans le sol, ou filtre à sable ou tertre d'infiltration, les systèmes à lit de roseau ou les systèmes à lits bactériens ;
- soit les bactéries sont libres. Il en est ainsi dans les systèmes à boues activées par de l'oxygène. Le système est alors composé d'un bassin de traitement aéré, et d'une cuve de séparation liquide/solide, généralement un décanteur.

La présente invention se rapporte à un procédé de conduite d'un système biologique à culture libre connu sous le sigle SBR (Sequencing Batch Reactor) et que nous désignons par le terme "Ré acteur Séquentiel Discontinu". Ce système présente les avantages suivants : flexibilité, simplicité et adaptabilité.

Le procédé de traitement des eaux résiduaires par un réacteur séquentiel discontinu se différencie des procédés classiques à boue activée par le fait qu'au sein d'un même réacteur, on assure les opérations de traitement des pollutions et les opérations de séparation des phases liquide et solide. Une gestion rigoureuse des différentes phases de réactions biologiques - aérées, anoxiques et anaérobies- permet d'assurer une élimination du carbone, de l'azote, du phosphore et des matières en suspension.

Les différentes étapes ou phases de réactions biologiques peuvent être séparées temporellement au cours d'un cycle de fonctionnement. On retrouve traditionnellement une étape de remplissage du réacteur au début du cycle, des étapes successives de réactions aérées ou non aérées, une étape de décantation, et une étape de vidange de l'eau épurée suivie d'une étape de purge de boues à la fin du cycle de fonctionnement avant de recommencer un nouveau cycle.

Les durées de différentes phases de réactions anoxiques ou aérobies sont actuellement établies au début d'un cycle de fonctionnement par une temporisation fixe ou via un système de contrôle dépendant d'un capteur unique (sonde de niveau, oxygène dissous) en fonction de la connaissance relative de l'eau à traiter et des normes à atteindre. Toutefois, étant donné la variation journalière des charges d'eaux usées appliquées, et la variabilité de ces dernières, les résultats obtenus en terme d'abattement de la pollution ne sont pas garantis. Il peut notamment se produire des dépassements de la norme de pollution et des accidents écologiques.

Le but de l'invention est de proposer un système de conduite du réacteur tel que mentionné dans le préambule qui permette de régler automatiquement les durées de certaines phases de réactions biologiques, en fonction des valeurs concomitantes de trois paramètres caractéristiques des effluents en cours de traitement : la variation de la vitesse de consommation de l'oxygène dissous, les évolutions des profils du pH et du potentiel redox.

Le procédé de conduite selon l'invention est caractérisé par le fait que l'on équipe le réacteur
- d'un capteur de mesure de l'oxygène dissous, associé à une régulation de la concentration en oxygène dissous dans le milieu réactionnel entre une valeur maximum et une valeur minimum ,
- d'un capteur de mesure du potentiel redox, et
- d'un capteur de mesure du pH,
par le fait que les moyens de commande comportent un organe de commande et un organe de calcul recevant en ligne des signaux desdits capteurs, ledit organe de calcul étant susceptible d'établir au cours de chaque cycle les évolutions de la concentration en oxygène dissous, du pH et du potentiel rédox en fonction du temps, et de déterminer, d'une part, lors des phases de réactions anoxiques, le maximum de la fonction mathématique associée à l'évolution du pH et le point d'inflexion de la fonction mathématique associée à l'évolution du potentiel redox , et d'effectuer le suivi de la concentration en oxygène dissous de manière à ne démarrer les calculs que lorsque la concentration devient inférieure à 0,5 mg.L⁻¹ et, d'autre part, lors des phases de réactions aérobies, le minimum de la fonction mathématique associée à l'évolution du pH et de calculer, sur les pentes descendantes entre deux seuils de régulation, la vitesse spécifique de consommation d'oxygène et de déterminer le point d'inflexion de la fonction mathématique associée à l'évolution de la vitesse spécifique de consommation d'oxygène et
par le fait que l'on commande la fin de la deuxième phase de réaction anoxique lorsque l'organe de calcul a déterminé le maximum de la fonction mathématique associée à l'évolution du pH et le point d'inflexion de la fonction mathématique associée à l'évolution de la courbe du potentiel redox, et on commande la fin de la première phase de réaction aérobie lorsque l'organe de calcul a déterminé le minimum de la fonction mathématique associée à l'évolution du pH et le point d'inflexion de la fonction mathématique associée à l'évolution de la vitesse spécifique de consommation d'oxygène.

Les avantageuses dispositions suivantes sont de préférence mises en oeuvre.

Par mesure de sécurité, les moyens de commande provoquent la fin d'une étape lorsque la durée mesurée de cette étape est supérieure à une durée de consigne prédéterminée pour cette étape. Ceci est particulièrement utile pour traiter des eaux usées en cas de défaillance d'un capteur par exemple.

L'on entraîne les moyens d'agitation à vitesse rapide lors des phases de réactions aérobies et durant l'étape de repos, et à vitesse lente lors des phases de réactions anoxiques, ces moyens d'agitation étant arrêtés durant les étapes de décantation et d'évacuation.

Les moyens d'aération des effluents sont mis en action lors des phases de réaction aérobie et durant l'étape de repos, afin de maintenir la teneur en oxygène dissous entre une valeur maximum et une valeur minimum, 2 mg/l et 5 mg/l par exemple.

On remplit partiellement le réacteur au cours de la première étape et on complète le remplissage au début de la deuxième phase de réaction anoxique de manière à favoriser une dénitrification exogène. Les remplissages sont commandés par le réglage du débit de l'eau d'entrée et par un capteur de niveau.

De manière avantageuse, après la deuxième phase de réaction aérobie et avant l'étape de décantation, on procède à une troisième phase de réaction anoxique et à une troisième phase de réaction aérobie.

Dans ce cas, on commande la fin de la troisième phase de réaction anoxique lorsque l'organe de calcul a déterminé le maximum de la fonction mathématique associée à l'évolution du pH et le point d'inflexion de la fonction mathématique associée à l'évolution de la courbe du potentiel redox.

Dans ce cas aussi, on commande la fin de la deuxième phase de réaction aérobie lorsque l'organe de calcul a déterminé le minimum de la fonction mathématique associée à l'évolution du pH et le point d'inflexion de la fonction mathématique associée à l'évolution de la vitesse spécifique de consommation d'oxygène.

En revanche, la fin de la troisième ou dernière phase de réaction aérobie est commandée par une valeur de consigne.

De manière à maintenir l'anoxie durant le remplissage, on remplit ledit réacteur par le dessous.

L'invention concerne également un réacteur pour le traitement séquentiel discontinu des eaux résiduaires ou effluents, comportant une cuve, des moyens d'amenée d'eaux résiduaires, des moyens d'aération des effluents, des moyens de vidange des eaux claires et des moyens de commande des moyens précédents.

Ce réacteur est caractérisé par le fait qu'il comporte en outre un capteur de mesure de l'oxygène dissous, un capteur de mesure du potentiel redox, un capteur de mesure du pH et un capteur de niveau pour la commande du remplissage et par le fait que les moyens de commande sont associés à un organe de calcul recevant des signaux desdits capteurs, ledit organe de calcul comprenant des moyens de traitement desdits signaux afin d'établir, au cours de chaque cycle de traitement, les évolutions de la concentration en oxygène dissous, du pH et du potentiel rédox en fonction du temps, et de déterminer, d'une part, lors des phases de réactions anoxiques, le maximum de la fonction mathématique associée à l'évolution du pH et le point d'inflexion de la fonction mathématique associée à l'évolution du potentiel redox, et d'effectuer le suivi de la concentration en oxygène dissous de manière à ne démarrer les calculs que lorsque la concentration devient inférieure à 0,5 mg.L⁻¹ et, d'autre part, lors des phases de réactions aérobies, le minimum de la fonction mathématique associée à l'évolution du pH et de calculer sur les pentes descendantes entre deux seuils de régulation la vitesse spécifique de consommation d'oxygène et de déterminer le point d'inflexion de la fonction mathématique associée à l'évolution de la vitesse spécifique de consommation d'oxygène.

Très avantageusement, la cuve comporte une paroi latérale cylindrique et un fond conique de manière à favoriser la décantation.

D'autres avantages et caractéristiques de l'invention ressortiront à la lecture de la description suivante faite à titre d'exemple et en référence aux dessins annexés, dans lesquels :
- la figure 1 est un schéma de principe du réacteur séquentiel discontinu selon l'invention,
- la figure 2 montre les profils d'évolution des concentrations des différentes formes de pollution au cours d'un cycle de traitement et l'évolution de la concentration en oxygène dissous au cours d'un cycle de 24 h;
- la figure 3 montre les profils d'évolution des espèces ioniques liées à l'élimination de l'azote (ions nitrate et ions ammonium) et du phosphore (ions orthophosphate) et l'évolution du pH au cours d'un cycle de 24 h ; et
- la figure 4 montre l'évolution du potentiel redox au cours d'un cycle de 24 h.

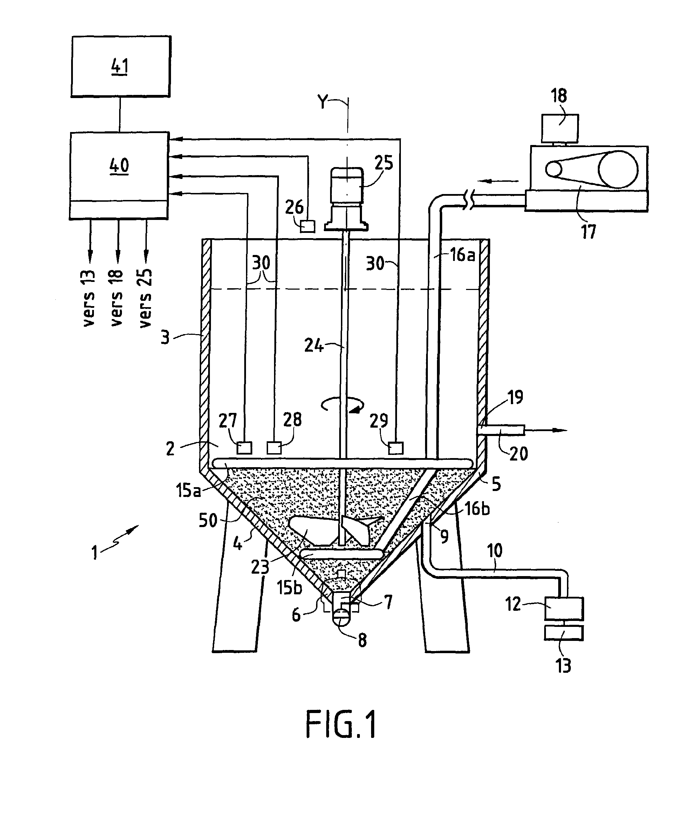

La figure 1 montre un réacteur séquentiel discontinu 1, qui comporte une cuve 2 ayant une paroi latérale cylindrique 3 d'axe vertical Y et un cône 4 formant le fond de la cuve 2 et raccordé à la partie inférieure 5 de la paroi cylindrique 3.

L'extrémité inférieure 6 du cône 4 comporte un orifice 7 équipé d'un dispositif 8 permettant d'extraire automatiquement les surplus de boues à la fin d'un cycle de fonctionnement. La paroi du cône 4 comporte un deuxième orifice 9 raccordé à un conduit 10 d'amenée d'eaux résiduaires par le fond de la cuve 2. Ce conduit 10 est lié à l'organe d'amené des eaux à traiter par exemple par l'intermédiaire d' une pompe immergée 12 entraînée par un moteur électrique 1. Le débit d'alimentation en effluent est ajusté au moyen d'une vanne et d'un débitmètre à flotteur, le démarrage de la pompe 12 est défini par un organe de commande 40 et l'arrêt par un capteur de niveau liquide 26.

La paroi interne du cône 4 est équipée d'un système d'aération constitué de deux tuyaux 15a, 15b toriques en polyéthylène. Le tuyau supérieur 15a est disposé au niveau de la jonction 5 de la paroi latérale cylindrique 3 et du cône 4, tandis que le tuyau inférieur 15b se situe à mi-hauteur du cône 4.

Ces tuyaux 15a et 15b sont percés d'une pluralité de trous ayant un diamètre de 1 mm environ, afin d'assurer un meilleur transfert d'oxygène dans les effluents contenus dans la cuve 2. Le tuyau supérieur 15a est en outre recouvert d'une membrane en silicone micro perforé qui assure la génération de fines bulles.

Les tuyaux 15a et 15b sont susceptibles d'être alimentés en air au moyen de 2 conduits d'air 16a et 16 b. L'air prélevé dans l'atmosphère est comprimé au moyen d'un surpresseur 17 entraîné par un moteur électrique 18. Le surpresseur 17 est par exemple du type à pistons rotatifs trilobes et le débit d'air délivré aux conduits d'air 16a et 16 b est ajusté au moyen d'un débitmètre à flotteur par exemple.

La paroi latérale cylindrique 3 de la cuve 2 comporte des orifices disposés à plusieurs niveaux afin de permettre d'effectuer des prélèvements d'effluents si besoin est. Il comporte notamment un orifice 19 disposé au voisinage de la jonction 5 de la paroi latérale cylindrique 3 et du cône 4 et raccordé à un conduit 20 d'évacuation des eaux claires à la fin du cycle de traitement. Le temps d'ouverture de la vanne du conduit 20 est géré par l'organe de commande 40 et ajusté de manière à ne pas provoquer la vidange du voile de boues.

Le réacteur 1 comporte en outre un agitateur 23, disposé dans le volume du cône 4. Cet agitateur 23 comporte des pales entraînées par un arbre 24 disposé dans l'axe Y de la cuve 2. L'arbre 24 est entraîné par un moteur électrique 25 à vitesse variable selon les phases de réaction biologique. La vitesse de rotation de l'arbre 24 sera ainsi faible pendant les phases de réaction anoxique, et élevée pendant les phases de réaction aérobie.

Le réacteur 1 décrit ci-dessus est en outre équipé de plusieurs capteurs susceptibles de délivrer des signaux analogiques.

Le capteur de niveau 26 d'eau dans la cuve 2 émet des faisceaux lumineux verticaux qui viennent se réfléchir sur la surface du liquide, et l'intervalle de temps entre l'émission du signal et la réception du signal incident donne une indication sur le niveau d'eau dans la cuve 2. Le capteur de niveau 26 sert à arrêter le moteur 13 de l'organe 12 lorsque le niveau maximum de remplissage est atteint.

Le faisceau incident ne doit intercepter ni les parois du réacteur, ni le système d'agitation. Aussi, le capteur de niveau 27 est disposé au voisinage de l'axe Y.

Les références 27, 28, 29 désignent respectivement un capteur de mesure de l'oxygène dissous dans le milieu réactionnel, un capteur de mesure du potentiel redox et un capteur de mesure du pH. Ces trois capteurs sont disposés dans la cuve 2 légèrement au-dessus du niveau de la jonction 5 entre la paroi latérale cylindrique 3 et le cône 4. Ils sont disposés à l'extrémité inférieure de tiges 30 retenues dans l'ouverture supérieure de la cuve au moyen d'une structure reposant sur le bord supérieur de la paroi cylindrique 3, cette structure supportant également le moteur électrique 25 qui entraîne l'arbre 24 de l'agitateur 23. Les tiges 30 sont régulièrement réparties autour de l'axe Y et disposées à la moitié du rayon de la paroi cylindrique 3 par exemple.

Les capteurs 26, 27, 28 et 29 délivrent des signaux analogiques vers l'organe de commande 40 qui gère la chronologie et la durée des différentes étapes ou phases de traitement durant un cycle de fonctionnement du réacteur 1 et qui commande l'arrêt ou la mise en marche des différents moteurs électriques 13, 18 et 25, et l'ouverture ou fermeture des différentes vannes, non montrées sur les dessins.

L'organe de calcul 41 reçoit un signal analogique de l'organe 40 et réalise l'acquisition, le lissage et la détermination des points d'inflexions, minima et maxima des fonctions mathématiques associées à l'évolution des mesures fournies par les différents capteurs. L'organe de calcul 41 délivre un signal numérique vers l'organe de commande 40 ce qui permet à ce dernier de gérer la chronologie des phases et le passage d'une phase à une autre.

Le fonctionnement du réacteur 1 au cours d'un cycle de traitement va maintenant être décrit ci-après.

Avant le début d'un cycle, la cuve renferme dans le volume interne du cône 4 un résidu de boues 50, issues du cycle de fonctionnement précédent.

La première étape du cycle de fonctionnement consiste à injecter des eaux résiduaires dans la cuve 2 et à procéder à une première phase de réaction anoxique. Les eaux résiduaires étant injectées par le fond de la cuve 2, le milieu réactionnel est maintenu à l'état anoxique, ce qui permet l'élimination des ions nitrate résiduels par une dénitrification exogène puis, en anaérobiose, le relargage du phosphore bactérien en présence de composés rapidement fermentescibles. Durant cette première étape, la cuve 2 est partiellement remplie jusqu'à un niveau pouvant représenter entre 50 et 80 % du volume utile, c'est-à-dire du volume délimité par la paroi latérale cylindrique 3 en-dehors du volume du cône 4. La durée de cette première étape de réaction anoxique est constante, par exemple égale à 3 h, et la durée du remplissage est commandée par le réglage du débit et le capteur de niveau liquide et est par exemple de 40 min. Durant cette première étape, le surpresseur 17 est à l'arrêt, l'agitateur 23 est à vitesse lente, et les vannes du dispositif 8 de purge de boue et du conduit 20 d'évacuation des eaux claires sont fermées. L'organe de commande 40 actionne la mise en marche du moteur 13 de la pompe 12 au début de cette étape et en commande l'arrêt dès que le capteur de niveau 26 indique le niveau à atteindre.

La deuxième étape du cycle consiste en une phase de réaction biologique aérobie. Durant cette deuxième étape, l'agitateur 23 est à vitesse rapide. Le surpresseur 17 est mis en fonction par l'organe de commande 40. Le surpresseur 17 fonctionne par intermittence durant cette deuxième phase, en fonction des signaux délivrés par le capteur 27 de mesure de l'oxygène dissous dans le milieu réactif, afin que la mesure de l'oxygène dissous durant cette deuxième phase soit comprise entre une valeur minimale et une valeur maximale , par exemple2 mg/l et 5 mg/l. La durée de cette deuxième phase peut atteindre 6 h environ. Au cours de cette phase de réaction aérobie, le carbone biodégradable est consommé, l'azote ammoniacale est nitrifié et le phosphore consommé. Selon l'invention, la fin de cette phase est déterminée par l'organe de calcul 41 relié à l'organe de commande 40 qui établit en fonction du temps les évolutions de la concentration en oxygène dissous, du pH et du potentiel rédox, et calcule le minimum de la fonction mathématique associée à l'évolution du pH et, sur les pentes descendantes entre deux seuils de régulation, la vitesse spécifique de consommation d'oxygène et détermine le point d'inflexion de la fonction mathématique associée à l'évolution de la vitesse spécifique de consommation d'oxygène. Lorsque le point d'inflexion et/ou le minimum du pH sont atteint, l'organe de commande 40 arrête le moteur 18 du surpresseur 17 et ordonne la mise à vitesse lente de l'agitateur 23.

On passe alors à la troisième étape du cycle qui est une deuxième phase de réaction anoxique afin de permettre l'élimination des ions nitrates formés, par dénitrification exogène, du fait que cette troisième étape commence par le remplissage complet de la cuve 2 du réacteur 1. La fin du remplissage est commandé par le capteur de niveau lorsque la hauteur de liquide atteint une valeur seuil maximale La fin de cette troisième étape est contrôlée selon l'invention par la détermination du maximum de la fonction mathématique associée à la courbe d'évolution du pH et/ou par la détermination du point d'inflexion de la fonction mathématique associée à la courbe d'évolution du potentiel redox.

La quatrième étape consiste en une deuxième phase de réaction aérobie qui induit la nitrification des ions ammonium et l'élimination du carbone apportés par le second remplissage. Comme pour la première phase de réaction aérobie, la fin de cette quatrième étape est déterminée par le minimum de fonction mathématique associée à la courbe d'évolution du pH et le point d'inflexion fonction mathématique associée à la courbe d'évolution de la vitesse spécifique de consommation d'oxygène. Durant cette étape, le surpresseur 17 est mis en fonctionnement par intermittence de manière à réguler la concentration en oxygène dissous entre deux valeurs (un minimum et un maximum) et l'agitateur 23 fonctionne à vitesse rapide.

La cinquième étape consiste en une troisième phase de réaction anoxique qui diffère de la deuxième phase de réaction anoxique par le fait que la cuve 2 étant pleine, il n'y a pas de mise en fonctionnement de la pompe 12 d'amenée d'eaux résiduaires. Cette étape permet une dénitrification endogène des ions nitrate précédemment formés. Comme dans le cas de la deuxième étape, La fin de cette cinquième étape est contrôlée selon l'invention par la détermination du maximum de la fonction mathématique associée à la courbe d'évolution du pH et/ou par la détermination du point d'inflexion de la fonction mathématique associée à la courbe d'évolution du potentiel redox. La durée de cette cinquième phase est relativement longue et peut atteindre 6 h.

La sixième étape consiste en une phase de réaction aérobie dont la durée est courte. Cette sixième étape sert uniquement à dégazer les boues avant l'étape de décantation. La durée de cette étape, un quart d'heure environ, et la fin est commandée par une temporisation.

La septième étape, d'une durée de 1 h 30 min environ est une opération de décantation qui consiste à séparer les phases liquide et solide. Durant cette étape, l'agitateur 23 est hors fonctionnement. Il en est de même du surpresseur 17.

La huitième étape consiste à vidanger les eaux claires par le conduit d'évacuation 20. La durée de cette étape est gérée par l'organe de commande 40 de manière à éviter de vidanger le voile de boue en surface.

La neuvième et dernière étape est une phase de repos et de purge de boues. Durant cette étape, on remet en suspension les boues 50 dans le volume interne du cône 4 via l'aération et l'agitation. Au cours de cette étape, on effectue aussi une purge des boues au moyen du dispositif 8. La durée de cette neuvième étape est commandée par une temporisation gérée par l'organe de commande 40 qui induit l'ouverture du dispositif 8 qui peut être par exemple une vanne préalablement étalonnée. La quantité de boues à extraire pourrait être définie par un capteur de turbidité, afin d'extraire exactement la quantité de boues produites dans le cycle de fonctionnement du réacteur 1.

A la fin de la neuvième phase, le réacteur 1 est prêt à recommencer un nouveau cycle de traitement.

Par mesure de précaution, et pour pallier une défaillance, de l'un des capteurs 26, 27 ou 28, la fin des phases anoxique et aérobie peut être provoquée, en outre, par une temporisation avec des valeurs de consigne normalement supérieures aux durées moyennes calculées par l'organe de calcul.

Lorsque la fin d'une phase de réaction aérobie ou anoxique est défini par un maximum ou un minimum de l'évolution du pH et/ou par la détermination du point d'inflexion de la fonction mathématique associée à l'évolution de la vitesse spécifique de consommation d'oxygène ou du potentiel rédox, il faut entendre que l'on provoque la fin de cette phase, selon l'invention, soit lorsque les deux conditions sont réunies dans un lapse de temps court, soit lorsque l'une seulement de ces conditions a été obtenue et qu'un lapse de temps prédéterminé s'est écoulé. Ceci permet d'arrêter cette phase en cas de difficulté dans la détection de la deuxième condition, afin d'éviter de provoquer l'arrêt par une temporisation et afin de diminuer la durée d'un cycle de fonctionnement en cas de mesure délicate d'un paramètre.

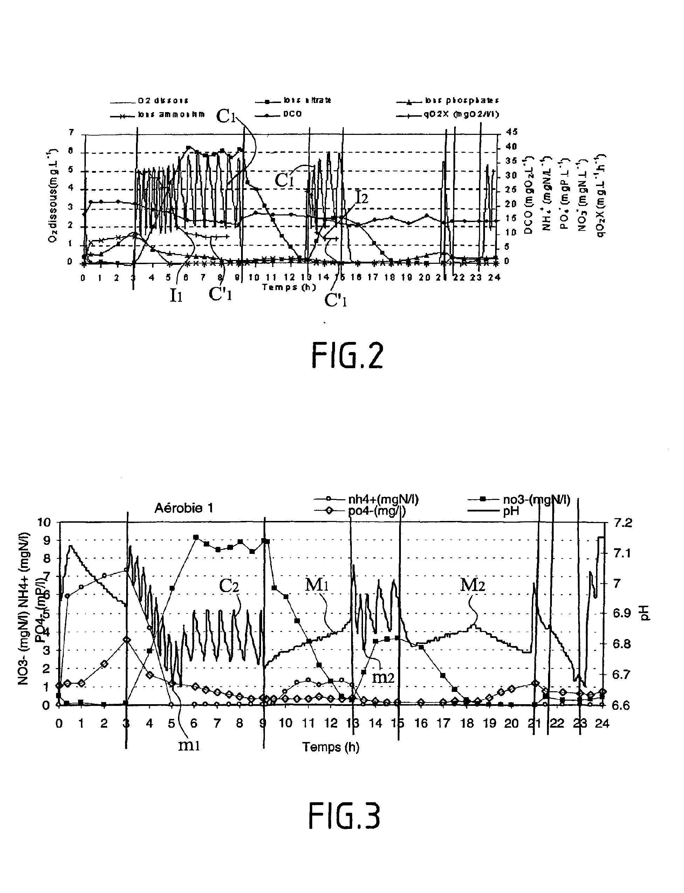

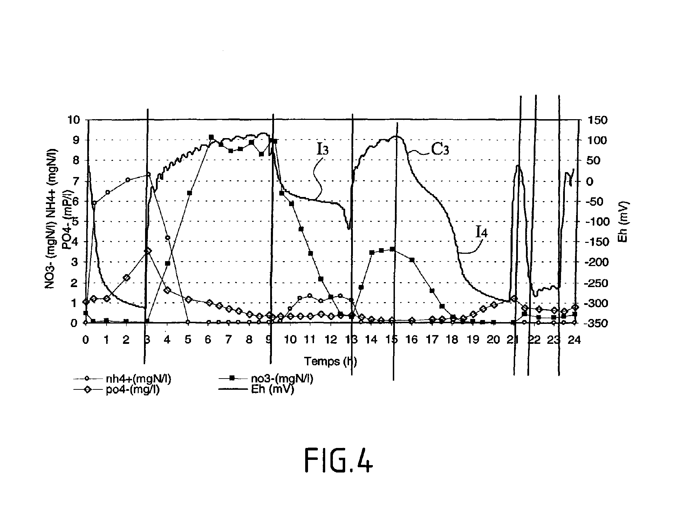

Les figures 2, 3 et 4 montrent les évolutions des concentrations de différentes formes de pollution dans les différentes étapes d'un cycle et, respectivement, la courbe C1 de l'évolution de la concentration en oxygène dissous, et C1' l'évolution de la vitesse de consommation d'oxygène (figure 2), la courbe C2 d'évolution du pH (figure 3), et la courbe C3 d'évolution du potentiel redox (figure 4).

Sur ces courbes C1, C1', C2, C3, on voit que durant les phases de réaction aérobie, la courbe C1' présente un point d'inflexion (I1, I2), et la courbe C2 présente un minimum (m1, m2).

Lorsque ces deux points ont été obtenus au cours d'une phase de réaction aérobie, il est inutile de poursuivre cette phase, et de faire fonctionner par intermittence le surpresseur 17, gros consommateur d'énergie.

Durant les phases de réaction anoxique, la courbe C2 d'évolution du pH présente des maxima M1 et M2, et la courbe C3 d'évolution du potentiel redox présente des points d'inflexion I3 et I4. Lorsque ces deux points sont atteints, on est à la fin d'une phase de réaction anoxique.

Les capteurs 27, 28, 29 fournissent des mesures à intervalle régulier, de préférence toutes les deux minutes. Les mesures sont entachées d'un bruit important, en particulier, à cause du seuil de sensibilité des capteurs, de phénomènes d'hystérésis, et d'obstructions passagères par des impuretés. Le bruit se manifeste par la présence de fréquences indésirables dans les signaux, ce qui risque de fausser l'interprétation des résultats, en introduisant des points caractéristiques factices ou bien en masquant des particularités intéressantes. Aussi pour traiter les signaux issus de ces capteurs, l'organe de calcul 41 de l'organe de commande 40 comporte un filtre passe-bas récursif du premier ordre, dont la période de la fréquence de coupure souhaitée dans la fonction de transfert est mesurée en nombre d'échantillons. Cette période varie selon les signaux à traiter et les phases de réaction. Les sorties du filtre passe-bas permettent d'obtenir les courbes d'évolution C1, C2 et C3, de traiter les dérivés premières de ces courbes pour obtenir les minima et les maxima et les dérivés secondes pour obtenir les points d'inflexion. La recherche des minima et maxima locaux peut être réalisée en comparant la valeur d'une mesure avec les valeurs des mesures voisines soit selon un processus de voisinage simple ou un processus de voisinage étendu, car il se pose un problème d'interprétation lorsque plusieurs valeurs successives en sortie sont identiques, et il faut éliminer les extrêmes locaux de courte durée.

Le fait que tout filtrage introduit un déphasage du signal initial, il se produit un retard dans la détection des points caractéristiques. Ce retard temporel dépend à la fois de la fréquence de coupure du filtre et du taux d'échantillonnage mais ce retard de quelques minutes n'a pas d'influence significative dans le résultat du traitement des eaux résiduaires selon le procédé de conduite objet de la présente invention.

## Revendications

1. Procédé de conduite d'un réacteur séquentiel discontinu destiné au traitement des eaux résiduaires ou effluents, selon un procédé de traitement par des bactéries libres en suspension aérées comportant, dans un cycle de traitement, les étapes suivantes :
- une première étape comportant le remplissage du réacteur, contenant des boues activées issues du cycle de traitement précédent, par des eaux résiduaires, de manière à maintenir l'anoxie, et une première phase de réaction anoxique afin de consommer les nitrates résiduels du cycle précédent et de créer des conditions anaérobies propres au relargage du phosphore ;
- une première phase de réaction aérobie afin de permettre l'élimination du carbone biodégradable et la nitrification ;
- une deuxième phase de réaction anoxique permettant la dénitrification des effluents ;
- une deuxième phase de réaction aérobie ;
- la décantation des effluents pour séparer la phase liquide de la phase solide ;
- l'évacuation des eaux claires par vidange partielle du réacteur ; et
- une étape de repos au cours de laquelle on extrait éventuellement le surplus de boues du réacteur ;
ledit réacteur étant équipé de moyens d'agitation des effluents, de moyens d'aération des effluents lors des phases aérobies, de moyens de remplissage et de moyens de vidange, lesdits moyens étant commandés par des moyens de commande gérant la chronologie et la durée des étapes successives
**caractérisé par le fait que** l'on équipe le réacteur
- d'un capteur de mesure de l'oxygène dissous, associé à et une régulation de la concentration en oxygène dissous dans le milieu réactionnel entre une valeur maximum et une valeur minimum ,
- d'un capteur de mesure du potentiel redox, et
- d'un capteur de mesure du pH,
**par le fait que** les moyens de commande comportent un organe de commande et un organe de calcul recevant en ligne des signaux desdits capteurs, ledit organe de calcul étant susceptible d'établir au cours de chaque cycle les évolutions de la concentration en oxygène dissous, du pH et du potentiel rédox en fonction du temps, et de déterminer, d'une part, lors des phases de réactions anoxiques, le maximum de la fonction mathématique associée à l'évolution du pH et le point d'inflexion de la fonction mathématique associée à l'évolution du potentiel redox , et d'effectuer le suivi de la concentration en oxygène dissous de manière à ne démarrer les calculs que lorsque la concentration devient inférieure à 0,5 mg.L⁻¹ et, d'autre part, lors des phases de réactions aérobies, le minimum de la fonction mathématique associée à l'évolution du pH et de calculer, sur les pentes descendantes entre deux seuils de régulation, la vitesse spécifique de consommation d'oxygène et de déterminer le point d'inflexion de la fonction mathématique associée à l'évolution de la vitesse spécifique de consommation d'oxygène et
**par le fait que** l'on commande la fin de la deuxième phase de réaction anoxique lorsque l'organe de calcul a déterminé le maximum de la fonction mathématique associée à l'évolution du pH et le point d'inflexion de la fonction mathématique associée à l'évolution de la courbe du potentiel redox, et on commande la fin de la première phase de réaction aérobie lorsque l'organe de calcul a déterminé le minimum de la fonction mathématique associée à l'évolution du pH et le point d'inflexion de la fonction mathématique associée à l'évolution de la vitesse spécifique de consommation d'oxygène.

2. Procédé selon la revendication 1, **caractérisé par le fait que**, par mesure de sécurité, les moyens de commande (40) provoquent, en outre, la fin d'une étape lorsque la durée mesurée de cette étape est supérieure à une durée de consigne prédéterminée pour cette étape.

3. Procédé selon l'une des revendications 1 ou 2, **caractérisé par le fait que** l'on entraîne les moyens d'agitation (23, 25) à vitesse rapide lors des phases de réaction aérobie et durant l'étape de repos, et à vitesse lente lors des phases de réaction anoxique, les moyens d'agitation étant arrêtés durant les étapes de décantation et d'évacuation.

4. Procédé selon l'une quelconque des revendications 1 à 3, **caractérisé par le fait que** les moyens d'aération des effluents sont mis en action, par intermittence, lors des phases de réaction aérobie et durant l'étape de repos, afin de maintenir la teneur en oxygène dissous entre 2 mg/l et 5 mg/1.

5. Procédé selon l'une quelconque des revendications 1 à 4, **caractérisé par le fait que** l'on remplit partiellement le réacteur au cours de la première phase anoxique et **par le fait que** l'on complète le remplissage au début de la deuxième phase de réaction anoxique.

6. Procédé selon l'une quelconque des revendications 1 à 5, **caractérisé par le fait que**, après la deuxième phase de réaction aérobie et avant l'étape de décantation, on procède à une troisième phase de réaction anoxique et à une troisième phase de réaction aérobie.

7. Procédé selon la revendication 6, **caractérisé par le fait que** l'on commande la fin de la troisième phase de réaction anoxique lorsque l'organe de calcul a déterminé le maximum de la fonction mathématique associée à l'évolution du pH et le point d'inflexion maximum de la fonction mathématique associée à l'évolution de la courbe du potentiel redox, et on commande la fin de la deuxième phase de réaction aérobie lorsque l'organe de calcul a déterminé le minimum de la fonction mathématique associée à l'évolution du pH et le point d'inflexion de la fonction mathématique associée à l'évolution de la vitesse spécifique de consommation d'oxygène.

8. Procédé selon l'une des revendications 6 ou 7, **caractérisé par le fait que** la fin de la troisième phase de réaction aérobie est commandée par une valeur de consigne.

9. Procédé selon l'une quelconque des revendications 1 à 8, **caractérisé par le fait qu'**on remplit ledit réacteur par le dessous.

10. Réacteur pour le traitement séquentiel discontinu des eaux résiduaires ou effluents, comportant une cuve (2), des moyens d'amenée (12, 10) d'eaux résiduaires, des moyens d'aération (17, 15a, 15b) des effluents, des moyens de vidange (20) des eaux claires et des moyens de commande (40) des moyens précédents **caractérisé par le fait qu'**il comporte en outre un capteur (27) de mesure de l'oxygène dissous, un capteur (28) de mesure du potentiel redox, un capteur (29) de mesure du pH et un capteur de niveau (26) pour la commande du remplissage et **par le fait que** les moyens de commande (40) sont associés à un organe de calcul (41) recevant des signaux desdits capteurs, ledit organe de calcul comprenant des moyens de traitement desdits signaux afin d'établir, au cours de chaque cycle de traitement, les évolutions de la concentration en oxygène dissous, du pH et du potentiel rédox en fonction du temps, et de déterminer, d'une part, lors des phases de réactions anoxiques, le maximum de la fonction mathématique associée à l'évolution du pH et le point d'inflexion de la fonction mathématique associée à l'évolution du potentiel redox , et d'effectuer le suivi de la concentration en oxygène dissous de manière à ne démarrer les calculs que lorsque la concentration devient inférieure à 0,5 mg.L¹ et, d'autre part, lors des phases de réactions aérobies, le minimum de la fonction mathématique associée à l'évolution du pH et de calculer sur les pentes descendantes entre deux seuils de régulation la vitesse spécifique de consommation d'oxygène et de déterminer le point d'inflexion de la fonction mathématique associée à l'évolution de la vitesse spécifique de consommation d'oxygène.

11. Réacteur selon la revendication 10, **caractérisé par le fait que** la cuve (2) comporte une paroi latérale cylindrique (3) et un fond conique (4).
